# EUROPEAN PATENT SPECIFICATION

(11) **EP 3 166 381 B1**
(45) Date of publication and mention of the grant of the patent: **27.11.2019**
(21) Application number: 15818523.1
(22) Date of filing: 26.06.2015
(51) Int. Cl.: A01B 59/043, A01B 15/14, A01B 59/06, A01B 73/00

(54) **ARTICULATED HEADSTOCK ON A THREE-POINT LINKED IMPLEMENT FOR CONNECTION TO A TOOL CARRIER**
GELENKSPINDELKOPF AN EINER AN DREI PUNKTEN VERBUNDENEN VORRICHTUNG ZUM ANSCHLIESSEN AN EINEM WERKZEUGTRÄGER
POUPÉE ARTICULÉE SUR UN OUTIL À LIAISON À TROIS POINTS POUR RACCORD À UN PORTE-OUTIL

(30) Priority: 09.07.2014 NO 20140868
(43) Date of publication of application: 17.05.2017
(73) Proprietor: Kverneland Group Operations Norway AS, 4355 Kvernaland (NO)
(72) Inventor: STANGELAND, Kjell- Egil, N-4352 Kleppe (NO); KRAGGERUD, Per Gunnar, N-4355 Kvernaland (NO)
(74) Representative: Håmsø Patentbyrå AS
(86) International application number: PCT/NO2015/050118
(87) International publication number: WO 2016/007015

(56) References cited:
- EP-A1- 0 992 371
- EP-A1- 1 080 622
- EP-A1- 1 080 622
- EP-A2- 2 033 504
- WO-A1-97/28677
- SE-C2- 529 786
- US-A- 5 697 454

## Description

The invention relates to a connecting arrangement for connecting a three-point linked implement to a tool-carrier, the implement comprising a cross shaft provided with lower spaced connecting points, the cross shaft being displaceable in the longitudinal direction of the implement and being pivotable around a vertical axis at least in a forward position, and an upper headstock portion provided with an upper connecting point.

Three-point-linked, elongated implements connected to a tractor will extend a long way backwards from the rear part of the tractor. A 7-furrow reversible plough will typically project 7-8 metres to the rear of the tractor. When driving through a turn, such a configuration could create situations hazardous to traffic, as the rear end of the implement makes large lateral swing-outs. This is increased by there being, as a rule, some play between the implement and the three-point linkage of the tractor, and even if the draft links of the three-point linkage are braced laterally, there may also be some flexibility in the draft links.

Trailed implements that are rolling on wheels of their own and are attached to the drawbar, possibly some other connection point, of the tractor exhibit the advantage, in terms of transport, of following behind the tractor. For the tractor driver it is easier to take into account the fact that the wheels of a trailed implement will follow a path having a smaller turning radius than the tractor; that is to say, go further inside than the tractor in a curve, and driving with trailed implements is considered to represent less risk to traffic than driving with elongated, three-point linked implements.

WO9728677 A1 discloses a semi-mounted reversible plough, that is to say a plough which is rolling on a set of supporting wheels both in a working position and in a transport position and is pivotably connected to the draft links of a tractor via a cross shaft. The document does not say anything about a three-point linkage between the tractor and the plough. The plough is lowered to its working position and lifted to its transport position by means of hydraulically operated supporting wheels and by vertical displacement of the cross shaft by the draft links of the tractor being operated.

FR 2651637 A1 discloses a displaceable and pivotable cross shaft for the attachment of a semi-mounted plough to the daft links of a tractor. The cross shaft may be fixed during ploughing. This document does not mention a three-point linkage between the tractor and the plough, either.

The applicant's own patent application NO 20131126 discloses a transport arrangement which combines the advantages that a three-point linked implement has during work, for example weight transfer to a connected tool-carrier, typically a tractor, with the advantage that a trailed implement has during transport. In a first position, that is to say in a working position, a cross shaft, including two spaced-apart lower connection points and forming attachment points between the implement and draft links arranged in a three-point linkage on the tool-carrier, is releasably connected to a forward portion of an implement frame, typically in a lower portion of a so-called headstock that projects upwards, forming an attachment point in an upper portion for a top link that forms an upper connection between the implement and the three-point linkage of the tool-carrier. In its first position, the cross shaft is connected in a rotationally rigid manner to the implement frame.

A problem which is obvious in the prior art according to what has been described above is connected to the top link which forms the third connection point in the so-called three-point connection. To allow the lower connection points to be moved away from the implement frame when the implement is connected to the tool-carrier, said top link must be disconnected from the upper connection point on the implement frame, possibly exhibit so large a length of stroke that the top link does not prevent the displacement of the lower connection points to their second position, preferably also allow setting to a float position to allow a free, vertical angular change of the longitudinal axis of the tool-carrier relative to the longitudinal axis of the implement, for example when driving on a surface with a varying gradient of slope in the moving direction of the tool-carrier and the implement.

Even though, in the description that follows, the invention has partly been concretized as an attachment system for a three-point linked plough, this is not to be construed as a restriction, as the invention represents a solution to the general problems that are associated with all elongated, three-point linked implements.

EP1080622A1 discloses a three-point linked plough provided with a rigid headstock projecting upwards and hydraulic cylinders for adjusting the working width of the plough. A hydraulic top link connects the headstock and a top-link attachment on a tractor. The top link is arranged to automatically adjust its effective length in connection with the reversal of the plough in order to provide sufficient ground clearance for the rear portion of the plough.

GB1462977A discloses a quick-coupling system for attaching and detaching an implement to/from the three-point linkage of a tractor by means of catch hooks that are arranged to releasably engage with connection points on the implement. A top link is provided with a device for mechanically adjusting the effective length as a locking device which, in an active position, is in engagement with an engagement portion of a telescopic section of the top link can release said section for axial displacement.

EP2033504A2 discloses a three-point linked plough in which a headstock projecting rigidly upwards is provided with a top-link attachment arranged in an end portion of a hydraulically pivotable trestle supported in a portion of the headstock. The top-link attachment is thereby displaceable in the longitudinal direction of the plough.

US5697454A discloses a hydraulic three-point connection unit for mounting on an implement attachment on the rear body of an endless-track vehicle to allow an attached implement to pivot up to about 15° to either side from a vertical plane coinciding with the longitudinal axis of the vehicle.

The invention has for its object to remedy or reduce at least one of the drawbacks of the prior art or at least provide a useful alternative to the prior art.

The object is achieved through the features that are specified in the description below and in the claims that follow.

The invention provides a transport arrangement, which combines the advantages that a three-point linked implement has during work, for example weight transfer to a connected tool-carrier, typically a tractor, with the advantage that a trailed implement has during transport. In a first position, that is to say in a working position, a cross shaft, including two spaced-apart lower connection points and forming attachment points between the implement and draft links arranged in a three-point linkage on the tool-carrier, is releasably connected to a forward portion of an implement frame, typically in association with a lower portion of a so-called headstock that projects upwards, forming an attachment point in its upper portion for a top link that forms an upper connection between the implement and the three-point linkage of the tool-carrier. In its first position, the cross shaft is connected in a rotationally rigid manner to the implement frame.

To be able to maintain the connection between the upper connection point of the three-point linkage and the tool-carrier without having to use a top link with an extraordinary adjusting length, typically with an extra-large length of stroke of a hydraulic cylinder, the headstock projecting up from a portion of the implement frame above the cross shaft is provided with a horizontal pivot joint. An upper headstock portion may therefore, whenever needed, be pivoted around a horizontal first pivot axis, which is perpendicular to the longitudinal axis of the implement. In this connection, the term "longitudinal axis" is to be understood as an axis coinciding with the working direction of the implement. The headstock is provided with a locking device arranged to brace the pivot joint when the transport arrangement is deactivated, and the implement is to be liftable and lowerable like an ordinary three-point linked implement.

The locking device of the pivot joint is preferably remote-controlled, for example by means of one or more linear actuators, typically by one or more locking elements being displaceable by means of one or more hydraulic cylinders. In an advantageous embodiment, the displaceable locking elements are accommodated in cavities in the upper headstock portion, whereas corresponding engagement portions are rigidly arranged on a lower portion of the headstock.

The lower portion of the headstock is preferably provided with a pivot-joint attachment, which is pivotable around a second pivot axis which is perpendicular to the first pivot axis and is substantially vertical when the implement is resting on a supporting surface. When the upper headstock portion is disengaged from the implement frame during transport of the implement in a trailed state, said headstock portion may pivot around said second pivot axis and thereby freely follow the turning of the tool-carrier relative to the implement when driving through a turn and so on. This is an advantage when the top link that connects the headstock and the upper connection point of the tool-carrier has a limited angular deflection at the ball joints that form the end portions of the top link.

It is an advantage if the horizontal pivot joint and the locking device are spaced relatively far apart, typically with a spacing in the range of 25-50 cm, to provide good stability and a favourable geometry.

It is also an advantage if one or more guide portions have been arranged in the upper and lower headstock portions, which are arranged to guide the upper headstock portion into an engagement position even if said upper headstock portion has not been pivoted exactly into its centred, normal direction before it is to be locked in its working position. The guide portion(s) may be integrated in the locking device.

The lower headstock portion is preferably integrated in the forward frame portion of the implement; that is to say, without exhibiting a structure projecting appreciably upwards. The pivot joints and locking device may thereby be provided within a geometrically large and well-dimensioned multifunctional structure.

When the articulate headstock is used on implements that include elements, which were conventionally connected to the headstock, for example the turnover cylinder of a three-point linked reversible plough, such elements are preferably connected to other portions of the forward frame portion of the implement, or the locking device is possibly placed in association with said elements, especially if they form portions of a frame structure located to the rear and have a need for bracing against the headstock when the implement is used in an ordinary three-point linked working position.

The invention is defined by the independent claim. The dependent claims define advantageous embodiments of the invention.

The invention relates more specifically to a connecting arrangement for connecting a three-point linked implement to a tool-carrier, the implement comprising a cross shaft provided with lower spaced-apart connection points, the cross shaft being displaceable in the longitudinal direction of the implement and being pivotable around a vertical axis last least in a forward position, and an upper headstock portion provided with an upper connection point, characterized by the upper headstock portion being attached to a lower headstock portion pivotable from a locked upright position in the longitudinal direction of the implement around a horizontal first pivot joint.

From a locked first position, the upper headstock portion may be pivotable in the direction towards the tool-carrier.

A locking device may be arranged at a distance from the first pivot joint.

A locking device comprising a remote-controlled displaceable engagement element may be arranged at a distance from the first pivot joint.

The first pivot joint may be in association with a pivot-joint attachment, which is arranged in a lower headstock portion pivotable around a second pivot joint, which is perpendicular to the first pivot joint. The second pivot joint may be substantially perpendicular to the longitudinal axis of the implement.

The lower headstock portion may be integrated in a forward frame portion.

The implement may be a plough.

The implement may be a reversible plough, in which a frame is pivotable supported in a turnover headstock in a forward frame portion and a turnover cylinder may form a further connection between the frame and the forward frame portion.

In what follows, an example of a preferred embodiment is described, which is visualized in the accompanying drawings, in which:
- Figure 1a: shows a side view of a three-point linked implement, shown here as a reversible plough, arranged in a lifted transport position according to the prior art and connected to a tool-carrier, shown here as a tractor, the reversible plough having been rotated into a middle position;
- Figure 1b: shows the same as figure 1a, but where the reversible plough has been rotated into a working position;
- Figure 2: shows a side view of a three-point linked implement in a transport position according to the invention;
- Figure 3: shows a plan of a three-point linked implement in a transport position according to the invention;
- Figure 4: shows, on a larger scale, a detail of a three-point connection between the implement and the tool-carrier, in which the implement is provided with a headstock according to the invention and a pivotable and displaceable cross shaft;
- Figure 5: shows the three-point connection in perspective, viewed at an angle from behind; and
- Figure 6: shows a principle drawing, on a smaller scale, of an implement with an alternative positioning of a locking device for the headstock.

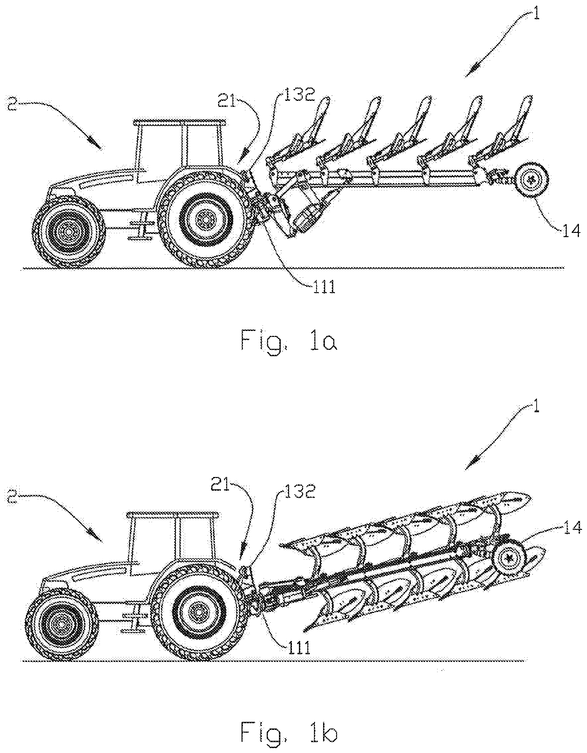

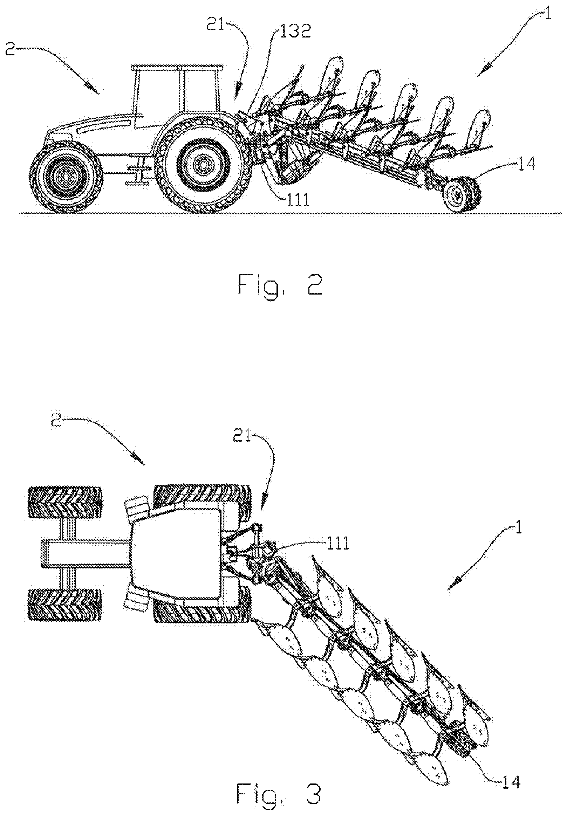

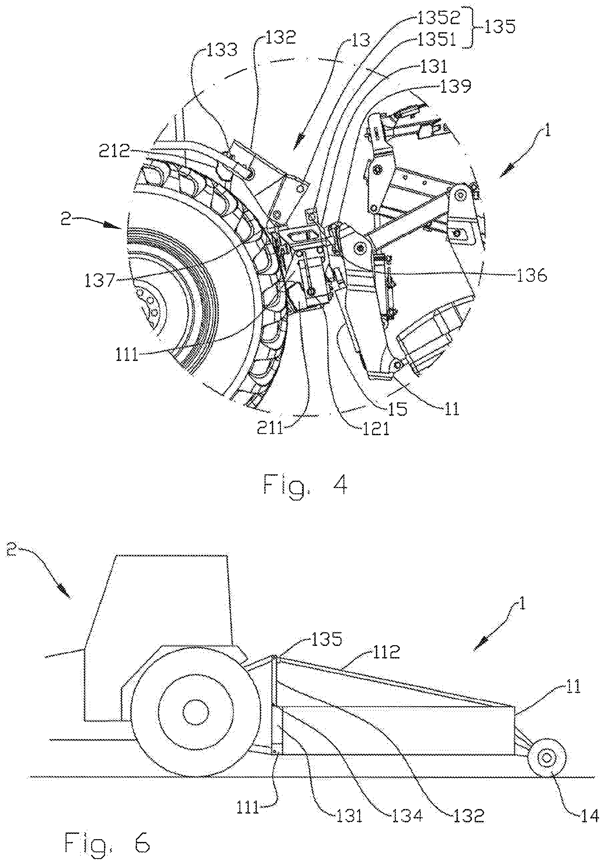

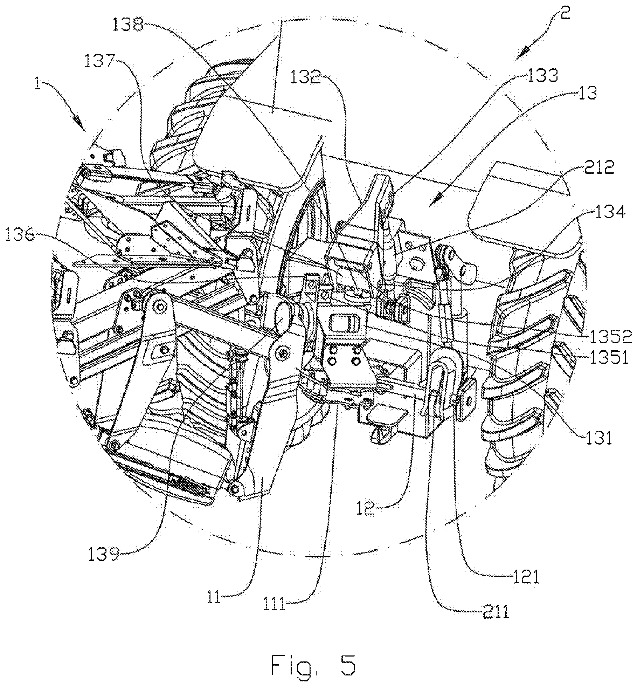

In the drawings, the reference numeral 1 indicates a three-point linked, elongated implement, shown in figures 1-5 as a reversible plough, connected to the three-point linkage 21 of an tool-carrier 2, two draft links 211 being connected to a cross shaft 12 arranged on a forward frame portion 111 of the implement 1 via lower connection points 121 and to a headstock 13 projecting up from the forward frame portion 111 and being provided with an upper connection point 133 in an upper headstock portion 132 (see in particular figures 4 and 5) . The implement 1 is provided with a supporting wheel 14 that is appropriately a combined depth and transport wheel.

Reference is now made to figures 4 and 5 in particular, in which the invention is shown in greater detail. The lower headstock portion 131 is appropriately integrated in the forward frame portion 111, wherein the upper headstock portion 132 is connected to the lower headstock portion 131 via a pivot-joint attachment 137 which forms a horizontal, first pivot joint 134 between the upper and lower headstock portions 132, 131 and a second pivot joint 138 which is perpendicular to the first pivot joint 134 and is substantially vertical when the implement 1 is resting on a horizontal supporting surface. A locking device 135 is arranged at a distance from the first pivot joint 134 and includes guide portions 136 arranged to pivot the upper headstock portion 132 around the second pivot joint 138 when the headstock portions 131, 132 are moved into locking engagement with each other if the upper headstock portion 132 is pivoted somewhat out of its normal horizontal direction in the initial connecting phase, which is possible within certain limits because of the ball joints, known *per se,* of the top link 212. The locking device 135 is not shown in detail but may be embodied in many different ways. In figures 4 and 5, fixed engagement portions 1351 project up from the forward frame portion 111 / the lower headstock portion 131, whereas one or more displaceable engagement elements 1352 are arranged in the upper headstock portion 132 and may be remote-controlled, for example by means of a hydraulically or mechanically activatable actuator (not shown).

The cross shaft 12 is displaceable along the longitudinal axis of the implement 1 and is pivotable around a vertical axis as is described in the Norwegian patent application 20131126.

When the implement 1 is to be trailed behind the tool-carrier 2, the supporting wheel 14 is set to a transport position. For a reversible plough 1, this happens by the reversible plough 1 being set to its middle position as is shown in figure 1a, and the supporting wheel 14 taking a middle position by means of its pivotable attachment and becoming locked. To a person skilled in the art, it will be obvious to choose a method of adjusting the supporting wheel(s) 14 suitable for the type of implement 1 on which the invention is used. Then the implement 1 is lowered until the supporting wheel 14 is resting on the supporting surface. The cross shaft 12 and the upper headstock portion 132 are released from their retracted, upright normal positions, and the tool-carrier 2 is moved forwards as the draft links 211 are lifted so that the implement 2, with the exception of the supporting wheel(s) 14, is lifted clear of the supporting surface. The implement can now be moved as a trailed implement while the top link 212 stays connected to the headstock 13. When the tool-carrier 2 turns relative to the implement 1 when driving through a turn, the cross shaft 12 and the upper headstock portion 132 will pivot freely around their vertical pivot axes.

When resetting to the normal three-point linked working position, the process is reversed by the tool-carrier 2 and the implement 1 being positioned in a straight line, the implement 1 being lowered until resting on the supporting surface and the tool-carrier 2 being reversed until the cross shaft 12 and the upper headstock portion 132 lockingly engage in their respective normal working positions. As the ball joints of the top link 212 makes an angular deviation between the upper headstock portion 132 and the longitudinal direction of the implement 1 possible, a possible deviating position around the second pivot axis 138 may occur in the connecting phase even if the implement 1 and the tool-carrier 2 are standing in exactly coinciding directions. The guide portions 136 of the locking device 135 ensure that the upper headstock portion 132 is righted around its vertical axis 138 before the locking device 135 is activated and connects the upper headstock portion 132 in a rotationally rigid manner to the lower headstock portion 131 / the forward frame portion 111.

For a reversible plough 1 which, because of its function, is provided with a turnover headstock 139 arranged in the frame 11 and rotatably supported in the forward frame portion 111, additionally includes a turnover cylinder 15 (see figure 4) forming a further connection between the frame 11 and the forward frame portion 111, it is obvious to arrange this connection in a low-lying area of the forward frame portion 111 and not in the upper portion of the headstock 13 as has been usual.

For other types of implements in which it is desirable to have a connection between the upper portion of the headstock 13 and the frame 11 extending rearwards, for example with an oblique rod 112 (see figure 6), this may be combined with the present invention by the locking device 135 being arranged at the transition between the headstock 13 and said oblique rods 112. The guide portions 136 may advantageously be arranged in the transition between the lower frame portion 111 and the upper headstock portion 132 at a distance from the pivot joints 134, 138.

The use of the verb "to comprise" and its various forms does not exclude the presence of elements or steps that are not mentioned in the claims. The indefinite article "a" or "an" before an element does not exclude the presence of a plurality of such elements.

## Claims

1. A connecting arrangement connecting a three-point linked implement (1) to a tool-carrier (2), the implement (1) comprising
a cross shaft (12) provided with lower spaced-apart connection points (121), the cross shaft (12) being displaceable in the longitudinal direction of the implement (1) and being pivotable around a vertical axis at least in a forward position, and
an upper headstock portion (132) provided with an upper connection point (133),**characterized in that** the upper headstock portion (132) is attached to a lower headstock portion (131) pivotable from a locked upright position in the longitudinal direction of the implement (1) around a horizontal first pivot joint (134).

2. The connecting arrangement according to claim 1, wherein, from a locked first position, the upper headstock portion (132) is pivotable in a direction towards the tool-carrier (2).

3. The connecting arrangement according to claim 1, wherein a locking device (135) is arranged at a distance from the first pivot joint (134).

4. The connecting arrangement according to claim 1, wherein a locking device (135) which comprises a remote-controlled displaceable engagement element (1352) is arranged at a distance from the first pivot joint (134).

5. The connecting arrangement according to claim 1, wherein the first pivot joint (134) is in association with a pivot-joint attachment (137) which is arranged in the lower headstock portion (131) pivotable around a second pivot joint (138) which is perpendicular to the first pivot joint (134).

6. The connecting arrangement according to claim 1, wherein the first pivot joint (134) is in association with a pivot-joint attachment (137) which is arranged in the lower headstock portion (131) pivotable around a second pivot joint (138) which is perpendicular to the first pivot joint (134) and substantially perpendicular to the longitudinal axis of the implement (1).

7. The connecting arrangement according to claim 1, wherein the lower headstock portion (131) is integrated in a forward frame portion (111).

8. The connecting arrangement according to claim 1, wherein the implement (1) is a plough.

9. The connecting arrangement according to claim 1, wherein the implement (1) is a reversible plough, and wherein a frame (11) is pivotably supported in a turnover headstock (139) in a forward frame portion (111) and a turnover cylinder (15) forms a further connection between the frame (11) and the forward frame portion (111).

## Patentansprüche

1. Verbindungsanordnung verbindend ein dreipunktverbundenes Arbeitsgerät (1) mit einem Werkzeugträger (2), wobei das Arbeitsgerät (1) Folgendes umfasst:
eine Querwelle (12), welche mit unteren, beabstandeten Verbindungspunkten (121) versehen ist, wobei die Querwelle (12) in der Längsrichtung des Arbeitsgeräts (1) versetzbar und mindestens in einer vorderen Position um eine vertikale Achse herum schwenkbar ist, und
ein oberer Drehwerkabschnitt (132), welcher mit einem oberen Verbindungspunkt (133) versehen ist, **dadurch gekennzeichnet, dass** der obere Drehwerkabschnitt (132) an einem unteren Drehwerkabschnitt (131) aus einer verriegelten aufrechten Position in die Längsrichtung des Arbeitsgerätes (1) um ein horizontales erstes Schwenkgelenk (134) herum schwenkbar angebracht ist.

2. Verbindungsanordnung nach Anspruch 1, wobei aus einer verriegelten ersten Position der obere Drehwerkabschnitt (132) in eine Richtung zum Werkzeugträger (2) schwenkbar ist.

3. Verbindungsanordnung nach Anspruch 1, wobei eine Verriegelungsvorrichtung (135) in einem Abstand von dem ersten Schwenkgelenk (134) angeordnet ist.

4. Verbindungsanordnung nach Anspruch 1, wobei eine Verriegelungsvorrichtung (135), die ein ferngesteuertes, versetzbares Eingriffselement (1352) umfasst, in einem Abstand von dem ersten Schwenkgelenk (134) angeordnet ist.

5. Verbindungsanordnung nach Anspruch 1, wobei das erste Schwenkgelenk (134) mit einer Schwenkgelenkbefestigung (137) verbunden ist, welche in dem unteren Drehwerkabschnitt (131) um ein zweites Schwenkgelenk (138), welches senkrecht zu dem ersten Schwenkgelenk (134) steht, herum schwenkbar angeordnet ist.

6. Verbindungsanordnung nach Anspruch 1, wobei das erste Schwenkgelenk (134) mit einer Schwenkgelenkbefestigung (137) verbunden ist, welche in dem unteren Drehwerkabschnitt (131) um ein zweites Schwenkgelenk (138), welches senkrecht zum ersten Schwenkgelenk (134) und im Wesentlichen senkrecht zu der Längsachse des Arbeitsgerätes (1) steht, herum schwenkbar angeordnet ist.

7. Verbindungsanordnung nach Anspruch 1, wobei der untere Drehwerkabschnitt (131) in einem vorderen Rahmenabschnitt (111) integriert ist.

8. Verbindungsanordnung nach Anspruch 1, wobei das Arbeitsgerät (1) ein Pflug ist.

9. Verbindungsanordnung nach Anspruch 1, wobei das Arbeitsgerät (1) ein Drehpflug ist, und wobei ein Rahmen (11) schwenkbar in einem Umdreh-Drehwerk (139) in einem vorderen Rahmenabschnitt (111) gelagert ist und ein Umdrehzylinder (15) eine weitere Verbindung zwischen dem Rahmen (11) und dem vorderen Rahmenabschnitt (111) bildet.

## Revendications

1. Un dispositif de raccord raccordant entre un outil à liaison à trois points (1) et un porte-outil (2), l'outil comprenant
un arbre transversal (12) muni de points de raccord inférieurs espacés (121), l'arbre transversal (12) pouvant être déplacé dans la direction longitudinale de l'outil (1) et pouvant être pivoté autour d'un axe vertical au moins dans une direction vers l'avant, et
une partie supérieure de poupée (132) munie d'un point de raccord supérieur (133), **caractérisé en ce que** la partie supérieure de poupée (132) est raccordée à une partie inférieure de poupée (131) pouvant être pivotée à partir d'une position dressée dans la direction longitudinale de l'outil (1) autour d'une première articulation de pivot horizontale (134).

2. Le dispositif de raccord selon la revendication 1, dans lequel, à partir d'une première position verrouillée, la partie supérieure de poupée (132) peut être pivotée dans une direction vers le porte-outil (2).

3. Le dispositif de raccord selon la revendication 1, dans lequel un dispositif de verrouillage (135) est disposé à une distance de la première articulation de pivot horizontale (134).

4. Le dispositif de raccord selon la revendication 1, dans lequel un dispositif de verrouillage (135) qui comprend un élément de mise en prise déplaçable commandé à distance (1352) est disposé à une certaine distance de la première articulation de pivot horizontale (134).

5. Le dispositif de raccord selon la revendication 1, dans lequel la première articulation de pivot horizontale (134) est en association avec une fixation d'articulation de pivot (137) qui est disposée dans une partie inférieure de poupée (131) pouvant être pivotée autour d'un seconde articulation de pivot (138) qui est perpendiculaire à la premiere articulation de pivot (134).

6. Le dispositif de raccord selon la revendication 1, dans dans lequel la premiere articulation de pivot (134) est en association avec une fixation d'articulation de pivot (137) qui est disposée dans une partie inférieure de poupée (131) pouvant être pivotée autour d'un seconde articulation de pivot (138) qui est perpendiculaire à la premiere articulation de pivot (134) et sensiblement perpendiculaire à l'axe longitudinal de l'outil (1).

7. Le dispositif de raccord selon la revendication 1, dans lequel la partie inférieure de poupée (131) est intégrée dans une partie avant de chassis (111).

8. Le dispositif de raccord selon la revendication 1, dans lequel l'outil (1) est une charrue.

9. Le dispositif de raccord selon la revendication 1, dans lequel l'outil (1) est une charrue réversible, et dans lequel un chassis (11) est supporté de manière pivotante dans une poupée de retournement (139) dans une partie de chassis avant (111) et un cylindre de retournement (15) forme une autre liaison entre le chassis (11) et la partie de cadre avant (111).
